# EUROPÄISCHE PATENTANMELDUNG

(11) **EP 1 139 036 A2**
(43) Veröffentlichungstag der Anmeldung: **04.10.2001**
(21) Anmeldenummer: 01105731.2
(22) Anmeldetag: 08.03.2001
(51) Int. Cl.: F24H 1/30, F24H 1/44, F24H 9/14

(54) **Wärmetauscher für Brennwertgeräte**

(30) Priorität: 29.03.2000 DE 10015645
(71) Anmelder: ROBERT BOSCH GMBH, 70442 Stuttgart (DE)
(72) Erfinder: Eichgruen, Stefan, 73277 Owen (DE)

(57) **Zusammenfassung**

Die Erfindung betrifft einen Wärmetauscher für Brennwertgeräte mit Brennkammer, Wärmeübertrager und Geräteanschluss. Eine einfache Anpassung an unterschiedliche Leistungen und Anschlussbedingungen wird mit einfach herstellbaren Funktionsteilen dadurch erreicht, dass der Wärmetauscher drei separate Funktionseinheiten umfasst, von denen das erste Funktionsteil als Brennkammerteil ausgebildet ist, das mit mehreren, als Wärmeübertragungsmodul ausgebildeten zweiten Funktionsteil verbunden ist, dass ein drittes, als Geräte-Anschlussteil ausgebildetes Funktionsteil den Abschluss des Wärmetauschers bildet und dass die Funktionsteile jeweils über Dichtungselemente gegeneinander abgedichtet sind, die getrennte Strömungswege über die Wärmeübertragungsmodule für das Abgas vom Brennkammerteil zum Geräte-Anschlussteil und für das zu erwärmende Wasser vom Geräte-Anschlussteil zum Brennkammerteil festlegen.

## Beschreibung

### Stand der Technik

Die Erfindung betrifft einen Wärmetauscher für Brennwertgeräte mit Brennkammer, Wärmeübertrager und Geräteanschluss.

Im Bereich der Brennwertgeräte gibt es unterschiedliche Wärmetauscherkonzepte. Dabei werden die Wärmetauscher in der Regel als Einheit für eine bestimmte Leistung ausgelegt. Dies bedeutet jedoch eine Anzahl verschieden großer Wärmetauscher, die stets mit dafür ausgelegten Vorrichtungen und/oder Werkzeugen hergestellt werden müssen. Dabei spielt es keine Rolle, ob die Wärmetauscher als Aluminium-Sandgussteil oder aus Rippenrohren hergestellt werden.

Es ist Aufgabe der Erfindung, einen Wärmetauscher der eingangs erwähnten Art zu schaffen, der auf einfache Weise auf unterschiedliche Leistungsklassen und Geräteanschlussbedingungen ausgelegt werden kann.

Vorteile der Erfindung

Diese Aufgabe wird nach der Erfindung dadurch gelöst, dass der Wärmetauscher drei separate Funktionseinheiten umfasst, von denen das erste Funktionsteil als Brennkammerteil ausgebildet ist, das mit mehreren, als Wärmeübertragungsmodul ausgebildeten zweiten Funktionsteil verbunden ist, dass ein drittes, als Geräte-Anschlussteil ausgebildetes Funktionsteil den Abschluss des Wärmetauschers bildet und dass die Funktionsteile jeweils über Dichtungselemente gegeneinander abgedichtet sind, die getrennte Strömungswege über die Wärmeübertragungsmodule für das Abgas vom Brennkammerteil zum Geräte-Anschlussteil und für das zu erwärmende Wasser vom Geräte-Anschlussteil zum Brennkammerteil festlegen.

Durch die Aufteilung des Wärmetauschers in drei Funktionsteile wird ein modularer Aufbau erreicht, so dass durch die Anzahl der aneinander gereihten Wärmeübertragungsmodule die Leistung des Wärmetauschers angepasst werden kann, wobei auf einheitliche Module zurückgegriffen werden kann. Die Aufteilung des Wärmetauschers erfolgt parallel zum Brenner, der mit dem Brennkammerteil verbunden wird, das wie das Geräte-Anschlussteil für unterschiedliche Anschlussbedingungen ausgelegt sein kann. Ein wesentlicher Vorteil besteht außerdem darin, dass alle Funktionsteile als Druckgussteile oder Kunststoff leicht und sehr kostengünstig herstellbar sind. Die Funktionsteile können in ihrer Anreihrichtung mittels der im kalten, wassergekühlten Bereich liegenden Dichtflächen mit den Dichtungselementen eindeutig abgedichtet werden. Durch die Anzahl der Wärmeübertragungsmodule kann der Wärmetauschergütegrad variiert werden. Damit ist eine Anpassung sowohl an verschiedene Leistungsgrößen als auch der Einsatz im kondensierenden und nicht kondensierenden Bereich möglich. Im kalten Bereich eines kondensierenden Wärmetauschers sind auch Wärmeübertragungsmodule denkbar, die als Kunststoffteile hergestellt sind, während sie in der Regel als Aluminium-Druckgussteile auszubilden und herzustellen sind.

Die Funktionsteilung bringt zudem eine Vereinfachung der Montage, da die Funktionsteile leicht miteinander verbindbar sind, wenn insbesondere vorgesehen ist, dass das Brennkammerteil, die Wärmeübertragungsmodule, das Geräte-Anschlussteil und die Dichtungselemente im Wesentlichen gleiche, rechteckförmige Außenkontur aufweisen und an aufeinander ausgerichteten Verbindungsstellen mit Verbindungslaschen versehen sind, die über Verbindungsbolzen und Muttern miteinander verbunden sind. Die Montage des Wärmetauschers kann dann ebenso wie die Herstellung der Funktionsteile in qualitativ hochwertiger und stark automatisierter Weise erfolgen.

Durch Variation des Brennkammerteils und des Geräte-Anschlussteils kann auf einfache Weise der Wärmetauscher an unterschiedliche Geräteplatteformen angepasst werden, es lassen sich aber auch zusätzliche Gerätefunktionen, wie z.B. hydraulische Funktionen, in den neuen Wärmetauscher integrieren.

Eine eindeutig entkoppelte Strömung des Abgases und des zu erwärmenden Wassers lässt sich nach einer Ausgestaltung dadurch erreichen, dass das Brennkammerteil auf der dem Wärmeübertragungsmodul zugekehrten Seite mit längsgerichteten, zum Wärmeübertragungsmodul offene Wasserkanäle aufweist, dass die Wärmeübertragungsmodule auf diese Wasserkanäle ausgerichtete, in Anreihrichtung beidseitig offene Wasserkanäle aufweist, dass das Geräte-Anschlussteil mit nur auf der dem Wärmeübertragungsmodul zugekehrten Seite offenen Wasserkanäle gleicher Ausrichtung versehen ist, dass die Dichtungselemente mit Abdeck-Längsstegen versehen sind, die die Wasserkanäle abdecken, die im Bereich einer Querseite jedoch mit Übergangsöffnungen versehen sind, dass die Wasserkanäle des Brennkammerteils in eine Vorlaufkammer mit Vorlaufanschluss einmünden, dass die Wasserkanäle der Wärmeübertragungsmodule über in Querrichtung verlaufende Verbindungsrohre miteinander verbunden sind und dass die Wasserkanäle des Geräte-Anschlussteils in eine Rücklaufkammer mit Rücklaufanschluss einmünden, sowie dadurch, dass das Brennkammerteil boxartig ausgebildet ist und im Bodenbereich mit Abgas-Austrittsöffnungen versehen ist, die mit den zwischen den Verbindungsrohren der Wärmeübertragungsmodule verbleibenden Zwischenräumen Strömungswege für das Abgas bilden.

Die Anbringung eines Brenners am Brennkammerteil wird dadurch erleichtert, dass die offene Seite des boxartigen Brennkammerteils mit Anschlusselementen für einen Brenner versehen ist, und dass das Brennkammerteil als Druckgussteil ausgebildet und hergestellt ist, wobei nicht nur die für die Beanspruchung ausreichende Festigkeit sichergestellt ist, sondern gleichzeitig auch die Herstellung dieses Funktionsteils vereinfacht und verbilligt wird.

Ist nach einer weiteren Ausgestaltung vorgesehen, dass die Vorlaufkammer des Brennkammerteils einseitig offen und mittels eines Verschlussdeckels verschliessbar ist, und dass eine Querseite der Wärmeübertragungsmodule mit einer Reinigungsöffnung versehen ist, die mittels Verschlussplatten verschliessbar ist, dann können diese Funktionsteile auf einfache Art gereinigt werden.

Der Aufbau des Wärmeübertragungsmoduls kann nach einer Ausgestaltung so ausgeführt sein, dass die Verbindungsrohre der Wärmeübertragungsmodule in einheitlicher Teilung angeordnet sind, dass zwei Lagen von Verbindungsrohren vorgesehen sind, die um eine halbe Teilung gegeneinander versetzt sind, und dass mit der Teilung die die Strömungswege für das Abgas bildenden Zwischenräume festgelegt sind, sowie dass die Verbindungsrohre der Wärmeübertragungsmodule mittels längsgerichteten Haltestegen zusätzlich gehalten sind.

Die Ausgestaltung des Geräte-Anschlussteils kann nach einer vorteilhaften Lösung dadurch gekennzeichnet sein, dass das boxartig ausgebildete Geräte-Anschlussteil im Bodenbereich mit einem Ablauf für Kondenswasser versehen ist, und dass das Abgas zwischen den Wasserkanälen in das Geräte-Anschlussteil einströmt und über einen Abgasauslass in einer Seitenwand abgeführt ist, der mit einem Abgassystem verbindbar ist.

Für die Dichtungselemente ist zu berücksichtigen, dass die Abdeck-Längsstege der Dichtungselemente über Querstege miteinander verbunden sind und dass in Anreihrichtung der Funktionsteile die Dichtungselemente abwechselnd mit vertauschten Querseiten, d.h. um 180° verdreht, angeordnet sind, sowie dass die Dichtungselemente als Aluminium-Stanzteile ausgebildet und mit einer aufvulkanisierten Dichtmasse versehen sind, um eine eindeutige Abdichtung zwischen den Funktionsteilen und eine wirksame Führung des Wassers und des Abgases durch den Wärmetauscher sicher zu stellen.

### Zeichnung

Die Erfindung wird anhand eines in den Zeichnungen dargestellten Ausführungsbeispiels näher erläutert. Es zeigen:
- Fig. 1: in Explosionsdarstellung einen Wärmetauscher, der aus einem Brennkammerteil, vier Wärmeübertragungsmodulen, einem Geräte-Anschlussteil und fünf Dichtungselementen zusammenbaubar ist,
- Fig. 2: in einer Teil-Explosionsdarstellung die Strömungswege von Wasser und Abgas durch ein beidseitig mit Dichtungselementen abdeckbares Wärmeübertragungsmodul und
- Fig. 3: die Teile der Fig. 2 nebeneinander angeordnet in Draufsicht gesehen.

### Ausführungsbeispiel

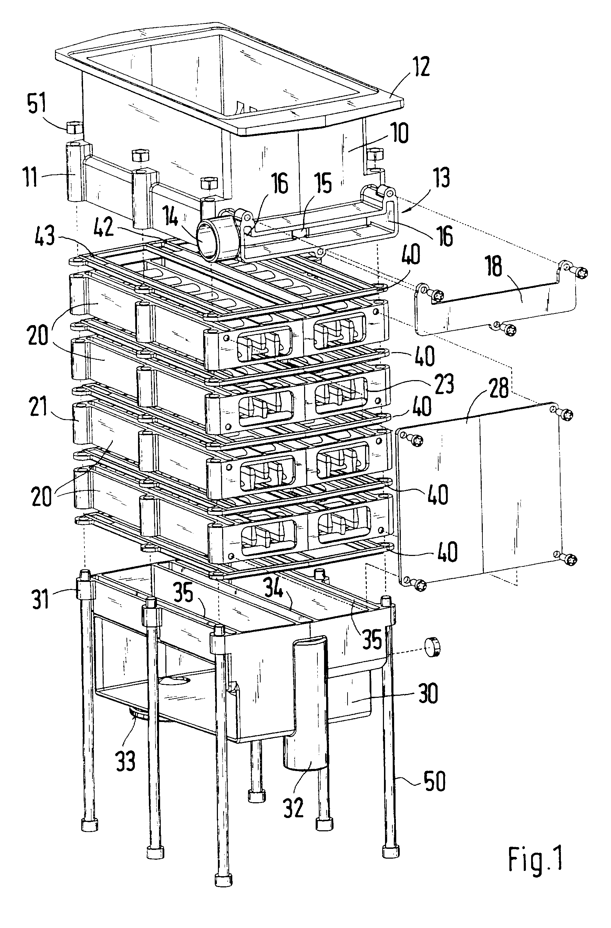

Der Wärmetauscher nach Fig. 1 umfasst ein Brennkammerteil 10, das boxartig ausgelegt und vorzugsweise als Aluminium-Druckgussteil hergestellt ist. Die offene Seite des Brennkammerteils 10 ist mit einem angeformten Befestigungsflansch als Anschlussteil 12 für einen Brenner versehen. Die rechteckige Außenkontur des Brennkammerteils 10 entspricht im Wesentlichen der Außenkontur von Wärmeübertragungsmodulen 20 und einem Geräte-Anschlussteil 30. Alle Funktionsteile tragen am Umfang aufeinander ausgerichtete Verbindungselemente 11,21 und 31 in Form von Verbindungslaschen für Verbindungsbolzen 50, denen Muttern 51 zugeordnet sind, um alle Funktionseinheiten zu einem Wärmetauscher zu verbinden.

An einer Querseite des Brennkammerteils 10 ist eine Vorlaufkammer 13 angeformt, die einseitig offen ist und mit einem Verschlussdeckel 18 verschlossen werden kann. Bei abgenommenem Verschlussdeckel 18 ist zu sehen, dass in die Vorlaufkammer 13 in Längsrichtung verlaufende Wasserkanäle 15 und 16 einmünden, die auf der Außenseite des Bodens des Brennkammerteils 10 angeformt und zu dem anschließenden Wärmeübertragungsmodul 20 hin offen sind. Dabei sind der Wasserkanal 15 in der Mitte und die beiden Wasserkanäle 16 im Bereich der Längsseiten des Brennkammerteils 10 angeordnet. Die Vorlaufkammer 13 ist mit dem Vorlaufanschluss 14 versehen. Der Boden des Brennkammerteils 10 ist zwischen den Wasserkanälen 15 und 16 mit Abgas-Austrittsöffnungen versehen.

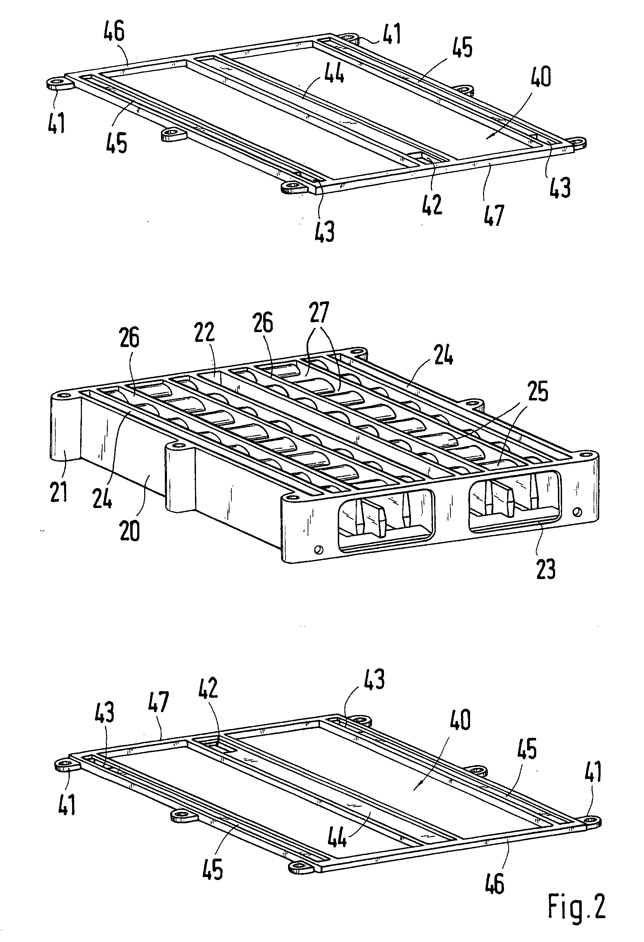

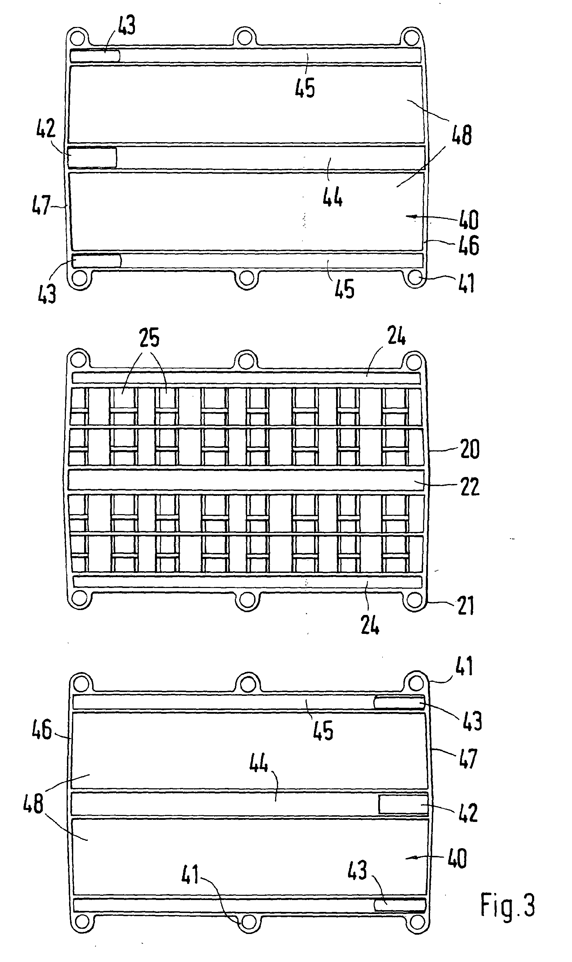

Den Übergang von dem Brennkammerteil 10 zum ersten Wärmeübertragungsmodul 20 übernimmt ein Dichtungselement 40, wie es aus den Fig. 2 und 3 zu entnehmen ist. Das Dichtungselement 40 weist Abdeck-Längsstege 44 und 45 auf, die die offenen Unterseiten der Wasserkanäle 15 und 16 abdeckt. Die Abdeck-Längsseiten 44 und 45 sind mittels Querstegen 46 und 47 auf Abstand gehalten. Zwischen Abdeck-Längsstegen 44 und 45 verbleiben Freiräume 48 für den Durchlass des Abgases. An einem Ende der Abdeck-Längsstege 44 und 45 sind im Bereich des Quersteges 47 mit Übergangsöffnungen 42 und 43 versehen.

Die Wärmeübertragungsmodule 20 haben längsgerichtete Wasserkanäle 22 und 24, die mit den Wasserkanälen 15 und 16 des Brennkammerteils 10 zur Deckung gebracht werden, aber durch die Anordnung eines Dichtungselementes 40 zwischen dem Brennkammerteil 10 und dem Wärmeübertragungsmodul 20 nur über die Übergangsöffnungen 42 und 43 des Dichtungselementes 40 miteinander in Verbindung stehen. Wie der Fig. 1 zu entnehmen ist, geschieht dies vorzugsweise auf der Querseite, die nicht mit der Vorlaufkammer 13 versehen ist, so dass das in den Wasserkanälen 15 und 16 fließende Wasser zur Kühlung des Brennkammerteils 10 und damit zur Verbesserung des Wirkungsgrades des Wärmetauschers beiträgt.

Wie die Fig. 2 und 3 erkennen lassen, sind die Wasserkanäle 22 und 24 der Wärmeübertragungsmodule 20 in Anreihrichtung beidseitig offen und werden stets durch Abdeck-Längsstege 44 und 45 von Dichtungselementen 40 abgedeckt. Dabei werden die Dichtungselemente 40 abwechselnd mit vertauschten Querstegen 46 und 47, d.h. um 180° verdreht eingesetzt. Damit wird über die in Reihe geschalteten Wärmeübertragungsmodule 20 bis zum Geräte-Anschlussteil 30 ein mäanderförmiger Durchfluss des Wassers erreicht. Innerhalb der Wärmeübertragungsmodule 20 verbinden quer gerichtete Verbindungsrohre 25 die Wasserkanäle 22 und 24, die in zwei Lagen übereinander angeordnet sind. Dabei sind die Verbindungsrohre 25 in einheitlicher Teilung beabstandet und lassen Zwischenräume 27 für den Durchtritt des Abgases frei. Die Lagen der Verbindungsrohre 25 sind dabei um eine halbe Teilung gegeneinander versetzt und mittels längsgerichteter Haltestege 26 zusätzlich gehalten.

Zumindest eine Querseite der Wärmeübertragungsmodule 20 ist mit einer Reinigungsöffnung 23 versehen, die mittels Abdeckplatten 28 verschliessbar sind. Diese Abdeckplatten 28 können sich dabei auch über mehrere, in Reihe geschaltete Wärmeübertragungsmodule 20 erstrecken.

Der dem Brennkammerteil 10 abgekehrte, letzte Wärmeübertragungsmodul 20 ist wieder über ein Dichtungselement 40 mit dem abschließenden Geräte-Anschlussteil 30 verbunden. Dabei weist das Geräte-Anschlussteil 30, wie Fig. 1 zeigt, deckungsgleiche Wasserkanäle 34 und 35 auf, die zum Wärmeübertragungsmodul 20 hin offen sind. Unabhängig von der Anzahl der in Reihe geschalteten Wärmeübertragungsmodule 20 münden die Übergangsöffnungen 42 und 43 des letzten Dichtungselementes 40 in diese Wasserkanäle 34 und 35 des Geräte-Anschlussteils 30. Im Ausführungsbeispiel nach Fig. 1 an der Querseite des Geräte-Anschlussteils 30, die einer Rücklaufkammer mit Rücklaufanschluss 32 abgekehrt ist. In die Rücklaufkammer münden die Wasserkanäle 34 und 35 ein. Zwischen den Wasserkanälen 34 und 345 tritt das Abgas in das boxartige Geräte-Anschlussteil 30 ein und kann je nach Abgassystem über eine Seitenwand desselben abgeführt werden. Dabei kann das Geräte-Anschlussteil 30 mit entsprechenden Anschlusselementen versehen sein. Der Boden des Geräte-Anschlussteils 30 ist mit einem Ablauf 33 für sich sammelndes Kondenswasser versehen.

## Patentansprüche

1. Wärmetauscher für Brennwertgeräte mit Brennkammer, Wärmeübertrager und Geräteanschluss,
**dadurch gekennzeichnet,**
**dass** er drei separate Funktionseinheiten umfasst, von denen das erste Funktionsteil als Brennkammerteil (10) ausgebildet ist, das mit mehreren, als Wärmeübertragungsmodul (20) ausgebildeten zweiten Funktionsteil verbunden ist,
**dass** ein drittes, als Geräte-Anschlussteil (30) ausgebildetes Funktionsteil den Abschluss des Wärmetauschers bildet und
**dass** die Funktionsteile jeweils über Dichtungselemente (40) gegeneinander abgedichtet sind, die getrennte Strömungswege über die Wärmeübertragungsmodule (20) für das Abgas vom Brennkammerteil (10) zum Geräte-Anschlussteil (30) und für das zu erwärmende Wasser vom Geräte-Anschlussteil (10) zum Brennkammerteil (10) festlegen.

2. Wärmetauscher nach Anspruch 1,
**dadurch gekennzeichnet,**
**dass** das Brennkammerteil (10), die Wärmeübertragungsmodule (20), das Geräte-Anschlussteil (30) und die Dichtungselemente (40) im Wesentlichen gleiche, rechteckförmige Außenkontur aufweisen und an aufeinander ausgerichteten Verbindungsstellen mit Verbindungslaschen versehen sind, die über Verbindungsbolzen und Muttern miteinander verbunden sind.

3. Wärmetauscher nach Anspruch 1 oder 2,
**dadurch gekennzeichnet,**
**dass** das Brennkammerteil (10) auf der dem Wärmeübertragungsmodul (20) zugekehrten Seite mit längsgerichteten, zum Wärmeübertragungsmodul (20) offene Wasserkanäle (15, 16) aufweist,
**dass** die Wärmeübertragungsmodule (20) auf diese Wasserkanäle (15, 16) ausgerichtete, in Anreihrichtung beidseitig offene Wasserkanäle (22, 24) aufweist,
**dass** das Geräte-Anschlussteil (30) mit nur auf der dem Wärmeübertragungsmodul (20) zugekehrten Seite offenen Wasserkanäle (34, 35) gleicher Ausrichtung versehen ist,
**dass** die Dichtungselemente (40) mit Abdeck-Längsstegen (44, 45) versehen sind, die die Wasserkanäle (15,16; 22,24; 34,35) abdecken, die im Bereich einer Querseite jedoch mit Übergangsöffnungen (42, 43) versehen sind,
**dass** die Wasserkanäle (15, 16) des Brennkammerteils (10) in eine Vorlaufkammer (13) mit Vorlaufanschluss (14) einmünden,
**dass** die Wasserkanäle (22,24) der Wärmeübertragungsmodule (20) über in Querrichtung verlaufende Verbindungsrohre (25) miteinander verbunden sind und
**dass** die Wasserkanäle (34, 35) des Geräte-Anschlussteils (30) in eine Rücklaufkammer mit Rücklaufanschluss (32) einmünden.

4. Wärmetauscher nach einem der Ansprüche 1 bis 3,
**dadurch gekennzeichnet,**
**dass** das Brennkammerteil (10) boxartig ausgebildet ist und im Bodenbereich mit Abgas-Austrittsöffnungen versehen ist, die mit den zwischen den Verbindungsrohren (25) der Wärmeübertragungsmodule (20) verbleibenden Zwischenräumen (27) Strömungswege für das Abgas bilden.

5. Wärmetauscher nach einem der Ansprüche 1 bis 4,
**dadurch gekennzeichnet,**
**dass** die offene Seite des boxartigen Brennkammerteils (10) mit Anschlusselementen (12) für einen Brenner versehen ist, und
**dass** das Brennkammerteil (10) als Druckgussteil ausgebildet und hergestellt ist.

6. Wärmetauscher nach einem der Ansprüche 1 bis 5,
**dadurch gekennzeichnet,**
**dass** die Vorlaufkammer (13) des Brennkammerteils (10) einseitig offen und mittels eines Verschlussdeckels (18) verschliessbar ist.

7. Wärmetauscher nach einem der Ansprüche 1 bis 6,
**dadurch gekennzeichnet,**
**dass** die Verbindungsrohre (25) der Wärmeübertragungsmodule (20) in einheitlicher Teilung angeordnet sind,
**dass** zwei Lagen von Verbindungsrohren (25) vorgesehen sind, die um eine halbe Teilung gegeneinander versetzt sind, und
**dass** mit der Teilung die die Strömungswege für das Abgas bildenden Zwischenräume (27) festgelegt sind.

8. Wärmetauscher nach einem der Ansprüche 1 bis 7,
**dadurch gekennzeichnet,**
**dass** eine Querseite der Wärmeübertragungsmodule (20) mit einer Reinigungsöffnung (23) versehen ist, die mittels Verschlussplatten (28) verschliessbar ist.

9. Wärmetausher nach einem der Ansprüche 1 bis 8,
**dadurch gekennzeichnet,**
**dass** die Verbindungsrohre (25) der Wärmeübertragungsmodule (20) mittels längsgerichteten Haltestegen (26) zusätzlich gehalten sind.

10. Wärmetauscher nach einem der Ansprüche 1 bis 9,
**dadurch gekennzeichnet,**
**dass** das boxartig ausgebildete Geräte-Anschlussteil (30) im Bodenbereich mit einem Ablauf (33) für Kondenswasser versehen ist, und
**dass** das Abgas zwischen den Wasserkanälen (34, 35) in das Geräte-Anschlussteil (30) einströmt und über einen Abgasauslass in einer Seitenwand abgeführt ist, der mit einem Abgassystem verbindbar ist.

11. Wärmetauscher nach einem der Ansprüche 1 bis 10,
**dadurch gekennzeichnet,**
**dass** die Abdeck-Längsstege (44, 45) der Dichtungselemente (40) über Querstege (46, 47) miteinander verbunden sind und
**dass** in Anreihrichtung der Funktionsteile die Dichtungselemente abwechselnd mit vertauschten Querseiten, d.h. um 180° verdreht, angeordnet sind.

12. Wärmetauscher nach einem der Ansprüche 1 bis 11,
**dadurch gekennzeichnet,**
**dass** die Dichtungselemente als Aluminium-Stanzteile ausgebildet und mit einer aufvulkanisierten Dichtmasse versehen sind.

13. Wärmetauscher nach einem der Ansprüche 1 bis 12,
**dadurch gekennzeichnet,**
**dass** die Wärmeübertragungsmodule (20) vorzugsweie als Aluminium-Druckgussteile und das Geräte-Anschlussteil (30) als Druckguss- oder Kunststoffteil ausgebildet und hergestellt sind.
